# EUROPÄISCHE PATENTANMELDUNG

(11) **EP 4 595 757 A1**
(43) Veröffentlichungstag der Anmeldung: **06.08.2025**
(21) Anmeldenummer: 24155852.7
(22) Anmeldetag: 05.02.2024
(51) Int. Cl.: A22B 5/16, A22C 17/12

(54) **SCHNEIDEINRICHTUNG, VERPACKUNG HIERFÜR UND EINE SCHNEIDEINRICHTUNGSANORDNUNG**

(71) Anmelder: Lutz GmbH & Co. Kg, 42653 Solingen (DE)
(72) Erfinder: LUTZ, Alexander, 42653 Solingen (DE)
(74) Vertreter: Michalski Hüttermann & Partner Patentanwälte mbB

(57) **Zusammenfassung**

Die vorliegende Erfindung betrifft eine Schneideinrichtung (1) zum Entschwarten oder Entvliesen. Die Einrichtung weist auf eine sich in einer Längsachse erstreckende Klinge (2) mit einer Schneide (3). Des Weiteren betrifft die vorliegende Erfindung eine Verpackung für die Schneideinrichtung (1) zum Entschwarten und Entvliesen. Des Weiteren betrifft die vorliegende Erfindung eine Schneideinrichtungsanordnung mit einer Schneideinrichtung (1), die in einer Verpackung aufgenommen ist.

## Beschreibung

### Technisches Gebiet

Die vorliegende Erfindung betrifft eine Schneideinrichtung zum Entschwarten oder Entvliesen. Die Einrichtung weist auf eine sich in einer Längsachse erstreckende Klinge mit einer Schneide.

Des Weiteren betrifft die vorliegende Erfindung eine Verpackung für eine vorgenannte Schneideinrichtung zum Entschwarten und Entvliesen.

Des Weiteren betrifft die vorliegende Erfindung eine Schneideinrichtungsanordnung mit der vorgenannten Schneideinrichtung, die in der vorgenannten Verpackung aufgenommen ist.

### Hintergrund der Erfindung

Eine Schneideinrichtung für das Entschwarten und Entvliesen wird verwendet, um die Haut von frischem Fleisch zu entfernen. Sie wird in der Lebensmittelindustrie verwendet, zum Beispiel für Fleisch, Fisch und Geflügel. Solche Einrichtungen erhöhen die Effizienz der Fleischverarbeitung. Die Schneidegeometrien garantieren präzise Schnitte, die die Fleischausbeute optimieren. Die zweite Stufe der Enthäutung ist nicht erforderlich. Beispielhaft kann es sich bei einer Schneideinrichtung um eine Entschwartungsklinge handeln. Vorteile von Entschwartungsklingen, sind zum Beispiel eine zuverlässige Schnittqualität, geeignet für gängige Maschinen, erweiterte Geometrie zur Erfüllung der Spezifikationen und weniger manuelle Nachbearbeitungen.

Bislang bekannt ist, Schneideinrichtungen zum Entschwarten und Entvliesen in Kunststoff-Verpackungen zu verpacken. Kunststoff ist jedoch bedingt recyclebar. Auf der anderen Seite sind die herkömmlichen Kunststoffverpackungen zumindest einseitig so transparent ausgestaltet, dass ein Anwender beim Auspacken der Schneideinrichtung den Verlauf und die Ausrichtung der Klinge durch die Kunststoffverpackung sehen kann. Insbesondere kann der Anwender der Klinge durch die Kunststoff-Verpackung hindurch Klingenparameter, insbesondere die Modellnummer, entnehmen, da diese üblicherweise auf der Klinge aufgelasert sind. Gerade bei der Handhabung von Klingen mit scharfen Schneiden ist durch die transparente Kunststoffverpackung die Gefahr für Verletzungen reduziert, weil der Anwender genau herleiten kann, wie er die Schneideinrichtung aus der Verpackung entnehmen kann, ohne sich an der scharfen Schneide zu verletzen. Da das Erkennen der Klingenausrichtung und die richtige Klingenmodellauswahl sehr wichtige Eigenschaften für einen regelmäßigen und sicheren Austausch von Klingen sind, halten Anwender an dieser Lösung fest und lehnen Alternativen bislang ab.

### Beschreibung der Erfindung

Ausgehend von dieser Situation ist es eine Aufgabe der vorliegenden Erfindung, besser Schneideinrichtungen zum Entschwarten/Entvliesen zu verpacken. Insbesondere sollen Schneideinrichtungen zum Entschwarten und Entvliesen mit einer besser recyclebaren Verpackung als herkömmlichen Kunststoffverpackungen verpackt werden können. Insbesondere soll die Verpackung genauso sicher sein wie herkömmliche transparente Verpackungen aus Kunststoff. In anderen Worten, insbesondere soll für den Anwender die Verletzungsgefahr genauso gering beim Auspacken der Schneideinrichtung sein.

Die Aufgabe der Erfindung wird durch die Merkmale der unabhängigen Hauptansprüche gelöst. Vorteilhafte Ausgestaltungen sind in den Unteransprüchen angegeben. Sofern technisch möglich, können die Lehren der Unteransprüche beliebig mit den Lehren der Haupt- und Unteransprüche kombiniert werden.

Insbesondere wird die Aufgabe demnach gelöst durch eine Schneideinrichtung zum Entschwarten oder Entvliesen. Die Schneideinrichtung weist eine sich in einer Längsachse erstreckende Klinge auf. Die Klinge weist auf: zumindest eine sich entlang, insbesondere parallel, der Längsachse der Klinge erstreckende längliche Schneide, zwei quer zur Schneide verlaufende Seiten, insbesondere Seitenkanten, und ein Klingenblatt. Hierbei begrenzen die Schneide und die beiden Seiten, insbesondere Seitenkanten, das Klingenblatt. Die Schneide ist über eine Abrundung mit zumindest einer der beiden Seiten verbunden.

Quer zur Schneide kann hierbei Orthogonalität, für eine oder beide Seiten, umfassen. Alternativ sind jedoch mit quer zur Schneide auch eine oder zwei nicht rechtwinklig zur Schneide verlaufende Seiten umfasst.

Die Schneide über kann beispielhaft über eine Abrundung mit zumindest einer oder mit genau einer der beiden Seiten verbunden sein. Besonders bevorzugt ist die Schneide über jeweils eine Abrundung mit beiden Seiten verbunden, sodass anders formuliert zwei Abrundungen vorliegen.

Weiterhin wird insbesondere die Aufgabe gelöst durch eine Verpackung für eine Schneideinrichtung zum Entschwarten und Entvliesen. Die Verpackung weist einen Verpackungskorpus und eine an dem Korpus ausgebildete, insbesondere von dem Korpus abstehende, Öffnungslasche zum Öffnen der Verpackung auf.
Die Verpackung weist eine, insbesondere vieleckige, bevorzugt viereckige, Umschlagmaterial-Schichtanordnung mit zumindest einer Materialschicht, die Umschlagmaterial-Schichtanordnung aufweisend zwei gleich lange, längs einer Längsachse erstreckende, längere Seiten und zwei gleich lange, kürzere Seiten.

Die Umschlagmaterial-Schichtanordnung weist zwei erste Faltlinien auf, um die Schneideinrichtung zwischen den ersten Faltlinien einzubetten, wobei die Umschlagmaterial-Schichtanordnung durch die Faltung an den ersten Faltlinien im Querschnitt zur Längsachse U-förmig mit einem U-Querbalken und zwei U-Stammbalken ausgestaltet ist. Ein Abstand der ersten Faltlinien beträgt 120 bis 145 Prozent, insbesondere 135 Prozent, einer Breite der Schneideinrichtung. Die Umschlagmaterial-Schichtanordnung weist zumindest eine zweite Faltlinie auf. Die zweite Faltlinie ist zu einer der ersten Faltlinien im Zickzack gefalten. Ein durch die Faltlinien eingegrenzter Bereich der Umschlagmaterial-Schichtanordnung bildet den Verpackungskorpus und ein außerhalb des eingegrenzten Bereichs liegender Bereich der Umschlagmaterial-Schichtanordnung bildet die Öffnungslasche. Die zwei längeren Seiten der Umschlagmaterial-Schichtanordnung sind in einem im Bereich der Öffnungslasche liegenden Verbindungsbereich miteinander verbunden.

Weiterhin wird insbesondere die Aufgabe gelöst durch eine Schneideinrichtungsanordnung, aufweisend die Schneideinrichtung und eine Verpackung wobei die Schneideinrichtung mit der Verpackung verpackt ist.

Nachfolgend werden vorteilige Aspekte der beanspruchten Erfindung erläutert und weiter nachfolgend bevorzugte modifizierte Ausführungsformen der Erfindung beschrieben. Erläuterungen, insbesondere zu Vorteilen und Definitionen von Merkmalen, sind dem Grunde nach beschreibende und bevorzugte, jedoch nicht limitierende Beispiele. Sofern eine Erläuterung limitierend ist, wird dies ausdrücklich erwähnt.

In anderen Worten ist vorgesehen, dass die Schneide der Klinge an ihren Enden abgerundet ist. Die Abrundung kann an verschiedene Bedingungen angepasst ausgestaltet sein. Bevorzugt ist, dass die Abrundung(en) eine Schneidkante der Schneide begrenzt/begrenzen. In anderen Worten, im Bereich der Abrundung(en) ist die Klinge nicht zum Schneiden vorgesehen, sondern nur an ihrer Schneidkante.

Die Abrundung an der Schneidkante ermöglicht zudem, dass eine Verpackung aufweisend Fasern, insbesondere aus Holzfasern, verwendet werden kann. Die Verpackung ist intransparent oder weniger transparent als herkömmliche Kunststoffverpackungen. Die Verpackung gibt durch ihren abgeklappten Flügel, welcher durch den Verbindungsbereich gebildet ist, dem Anwender eine Vorzugsorientierung für das Halten und das Öffnen der Verpackung vor, welche für den Anwender intuitiv ist. Das Einreißen des Verbindungsbereichs erfolgt damit stets quer zu einer Erstreckungsebene des Klingenblatts der Schneideinrichtung. Die Größe des Verbindungsabschnitts ist bevorzugt derart gewählt, dass er bequem und leicht von einem Anwender eingerissen werden kann. Über die Vorzugsorientierung des Verbindungsbereichs bezüglich der Schneide/eines Verpackungshauptkorpus wird eine Sicherheit bei der Handhabung der scharfen Schneide in der Verpackung merklich erhöht. Weiterhin ist durch die bezüglich der Schneideinrichtungsschneide breitere Verpackung die Schneide zu dem Verpackungskorpus beabstandet. Die Verpackung bildet hierdurch eine die Schneide umschließende Luftkammer, welche beim Transport die Schneideinrichtung schützt. Es sei erwähnt, dass die Verpackung besonders für Schneideinrichtungen mit geradem, planen Klingenblatt/Klinge geeignet ist.

Die Schneide ist der Teil des Klingenblatts, welcher die Funktion des Schneidens hat. Es kann sich um einen speziell an der Klinge vorgesehenen, scharfkantigen Bereich der Klinge handeln.

Eine Seite bildet in einer Draufsicht auf den Körper der Schneideinrichtung eine Abgrenzung einer Fläche in einer Querschnittsebene. Es handelt sich stets um eine Querschnittsebene quer zur Längsachse der Klinge, d.h. quer zur größten Erstreckungsrichtung der Klinge. Eine jeweilige Kante, sei es beispielsweise eine Seitenkante oder eine Schneidkante, ist dann diejenige Linie am Körper, an welcher zwei Flächen zueinander abgegrenzt sind. Die Abgrenzung ist über eine abrupte oder diskontinuierliche Änderung einer Steigung der Klingenoberfläche, z.B. einer Stufe, sichtbar, welche durch die Kante gebildet ist. Eine Seite kann eine Kante sein. Umgekehrt ist jedoch nicht jede Kante eine Seite. Kurzum, eine Seite oder Seitenlinie begrenzt eine Fläche. Eine Kante begrenzt die Fläche eines eckigen/kantigen Körpers.

Bevorzugt bilden die quer zur Schneide, insbesondere Schneidkante, verlaufenden Seiten, insbesondere Seitenkanten, zusammen mit der Schneidkante der Schneide oder der Schneide eine Außenumrisskante der Klinge. Die Seiten, insbesondere Seitenkanten, gehen jeweils in die Schneidkante der Schneide über. In einem Übergangsbereich, in welchem die Seiten oder Seitenkanten in die Schneidkante oder Schneide übergehen, kann die Abrundung vorgesehen sein.

Zusammengefasst, die Erfindung ermöglicht erstmals die Verwendung von völlig intransparenten Verpackungsmaterialien. Bei den intransparenten Verpackungsmaterialien kann es sich um Papier oder Pappe handeln. In anderen Worten, sowohl die Ausgestaltung der Schneide als auch die Ausgestaltung der Verpackung ermöglichen, dass ein Anwender die Schneideinrichtung mit einer reduzierten Gefahr für Verletzungen aus der Verpackung entpacken kann. Weiterhin löst die Schneideinrichtungsanordnung einer mit der Verpackung verpackten Klinge die voranstehend genannten Aufgaben. Die Schneideinrichtungsanordnung ist ein sicheres für den Anwender handhabbares Produkt, welches bei verringerten Verletzungsrisiko gehandhabt werden kann.

Die Schneideinrichtung kann aus einem Werkstoff gemäß DIN EN ISO 8442-2 - 2017-09 ausgestaltet sein. Beispielsweise kann der Werkstoff aufweisen: Kohlenstoffstahl, rostbeständigen oder rostfreien Stahl, Hochleistungs-Schnellarbeits-Stahl (HSS), Werkzeugstahl, Hartmetall(e), Keramik(en). Die Schneidkante kann ein- oder mehrdimensional sein. Beispielsweise kann die Schneidkante eine Einfach-, Doppel- oder Dreifachfacette aufweisen und/oder konvex, konkav oder geradlinig ausgebildet sein. Die Schneideinrichtung kann ein- oder beidseitig eine Schneide aufweisen. Bei einer einseitig ausgebildeten Schneide verläuft die Schneide bezüglich des Klingenblatts wie ein Pultdach. Bei einer zweiseitig ausgebildeten Schneide verläuft die Schneide bezüglich des Klingenblatts wie ein Satteldach Die Schneideinrichtung kann zusätzlich oder alternativ ein- oder zweischneidig sein. Die Schneideinrichtung kann beispielsweise an der Klinge angeordnete Schutzbereiche, insbesondere Gummischutzbereiche, aufweisen oder aber auch die Klinge selbst sein.

Die Abrundung kann an verschiedene Bedingungen angepasst ausgestaltet sein. Hierbei ist die Abrundung in erster Linie dazu angepasst, dass ein Anwender sich beim Entfernen der Verpackung von der Klinge nicht an der Schneide schneiden kann. Die Verpackung ist bevorzugt aus einem Verpackungspapier ausgestaltet. Vorzugsweise besteht die Verpackung aus Packpapier.

Die Abrundung kann beispielsweise als Entgratung hergestellt sein. Die Abrundung kann rund ausgestaltet sein. Das bedeutet, dass die Außenumrisskante an der Abrundung kontinuierlich verläuft. Insbesondere gehen die aufeinandertreffenden Seitenkanten oder die Schneidkante und die Seitenkante kontinuierlich ineinander über. Alternativ kann eine Abrundung durch einen stumpfen Winkel zwischen einer Schneidkante und einer Seitenkante oder zwei Seitenkanten gebildet sein. Der stumpfe Winkel ist vorzugsweise größer als 140 Grad, weiter bevorzugt größer als 150 Grad oder größer gleich 150 Grad. Bevorzugt ist auch ein stumpfer Winkel von 165 Grad, insbesondere wenn der stumpfe Winkel im schneidenden Bereich der Klinge, d.h. in Form einer Schneidausklinkung, ausgebildet ist. Dann schließen die Außenumrisskante der Schneidausklinkung und die Schneidkante den stumpfen Winkel ein. Bei mehreren Abrundungen ist denkbar, dass eine/mehrere Abrundung(en) durch einen stumpfen Winkel und die andere(n) Abrundung (en) als eine kontinuierlich verlaufende Umrisskante ausgebildet sind. Es kann auch eine Abrundung an der Klinge selbst vorgesehen sein. Beispielsweise kann eine Schneidausklinkung an dem schneidenden Teil der Klinge vorgesehen sein. Die Schneidausklinkung kann als ein schräg zur Schneidkante verlaufender Kantenabschnitt der Klinge ausgebildet sein. Die Schneidausklinkung kann geradlinig ausgebildet sein.

Optional kann die Abrundung nur eine kontinuierliche Außenumrisskante sein oder alternativ ausschließlich nicht kontinuierlich, also in Form eines stumpfen Winkels, ausgestaltet sein.

Beispielhaft kann vorgesehen sein, dass die Verpackung zumindest teilweise oder vollständig intransparent oder weniger transparent ist, insbesondere als eine durchsichtige Kunststofffolie. Intransparent bedeutet mit Vorzug im Wesentlichen blickdicht. Weniger transparent kann beispielsweise milchig oder teildurchsichtig bedeuten. Unabhängig von anderen Merkmalen hat eine intransparente oder weniger transparente Verpackung den Vorteil, dass sie bedruckt werden kann. So können beispielsweise die Ausrichtung der Klinge in der Verpackung, um beim Auspackungen Schnittverletzungen zu vermeiden, und/oder Klingenparameter, insbesondere das Klingenmodell, auf der Verpackung aufgedruckt sein, sodass der Anwender stets die richtige Klinge auswählt. Ein Vorteil des Druckens ist, dass teure Laserdruckverfahren auf der Klinge wegfallen und die Gesamtherstellung günstiger und schneller erfolgt.

Die Verpackung weist beispielsweise eine viereckige, insbesondere rechteckige, Umschlagmaterial-Schichtanordnung mit zumindest einer Materialschicht auf. Die viereckige, insbesondere rechteckige, Umschlagmaterial-Schichtanordnung weist zwei gleich lange, längs einer Längsachse erstreckende, längere Seiten und zwei gleich lange, kürzere Seiten auf.

Insbesondere weist die Umschlagmaterial-Schichtanordnung Fasern auf oder die Umschlagmaterial-Schichtanordnung ist aus Holzfasern gebildet, beispielsweise ist die Umschlagmaterial-Schichtanordnung ein Barrierepapier,
Die Umschlagmaterial-Schichtanordnung kann ausgestaltet sein, die Schneide der Schneideinrichtung oder die gesamte Schneideinrichtung vollständig zu umschließen. Alternativ oder zusätzlich ist die Verwendung von einem oder mehreren Sichtfenstern denkbar, um Spezifikationen der Klinge für den Anwender durch das Fenster, wie zum Beispiel den Hersteller, die Art der Schneideinrichtung, eine Anzahl von Schneiden usw. nachvollziehbar zu machen ohne die Verpackung öffnen zu müssen.

Die Umschlagmaterial-Schichtanordnung der Verpackung weist zwei erste Faltlinien auf, um die Schneideinrichtung zwischen den ersten Faltlinien einzubetten, wobei die Umschlagmaterial-Schichtanordnung durch die Faltung an den ersten Faltlinien im Querschnitt zur Längsachse U-förmig mit einem U-Querbalken und zwei U-Stammbalken ausgestaltet ist. In anderen Worten, die ersten Faltlinien sind derart ausgestaltet, dass an der Umschlagmaterial-Schichtanordnung bezüglich der Faltrichtung eine Wickelfalz gebildet ist. Die Umschlagmaterial-Schichtanordnung ist durch die beiden Faltlinien in drei Abschnitte eingeteilt. Die Abschnitte können unterschiedlich groß sein. Weitere Faltungen entlang weiterer Faltlinien sind denkbar. Die beiden ersten Faltlinien sind dafür vorgesehen, um die Schneideinrichtung in der Verpackung aufzunehmen. Der Abstand der beiden Faltlinien ist größer als die Breite der Schneideinrichtung. Hierdurch wird eine Beabstandung der Klinge zum Verpackungsmaterial erzielt und die Schneideinrichtung ist gleichzeitig in einer Luftkammer aufgenommen, wodurch die Schneideinrichtung im verpackten Zustand mechanisch geschützt ist.

Ein Abstand der ersten Faltlinien beträgt 120 bis 145 Prozent, insbesondere 135 Prozent einer Breite der Schneideinrichtung. Der Abstand der Faltlinien ist die Breite des U-Querbalkens.

Die Umschlagmaterial-Schichtanordnung weist zumindest eine zweite Faltlinie auf, wobei die zweite Faltlinie zu einer der ersten Faltlinien im Zickzack gefalten ist.

Die zwei längeren Seiten der Umschlagmaterial-Schichtanordnung sind in einem Verbindungsbereich miteinander, z. B. adhäsiv, verbunden. Der Verbindungsbereich liegt innerhalb der Öffnungslasche.

Die zweite Faltlinie grenzt bevorzugt den Verbindungsbereich für Flächen der Umschlagmaterial-Schichtanordnung an beiden längeren Seiten ab. In anderen Worten, an der zweiten Faltlinie wird der Verpackungskorpus von der Öffnungslasche abgegrenzt. Die Öffnungslasche liegt in einem Bereich der Umschlagmaterial-Schichtanordnung, welcher zwischen der zweiten Faltlinie und den beiden längeren Seiten liegt.

Die zweite Faltlinie und der Verbindungsbereich wirken beispielsweise zusammen, um den Verbindungsbereich bezüglich des U-Querbalkens oder bezüglich der Schneide mit einem Winkel kleiner als 90 Grad auszurichten. Der Verbindungsbereich ist bevorzugt ausgestaltet, um zum Öffnen der Verpackung eingerissen zu werden.

Bei dem Verpackungspapier handelt es sich um ein Barrierepapier. Das Verpackungspapier hat ein Flächengewicht von 70 g/m^2 und ist heißsiegelfähig. Das Papier basiert auf Frischfasern und dient als umweltfreundliche und nachhaltige Alternative zu bestehenden Kunststoffverpackungen aus Folien und Folienverbunden. Beispielhaft ist ein solches Barrierepapier in DE 10 2017 131 277 A1 beschrieben. Das Papier weist eine Dicke im Bereich von 70 × 10^-3 m auf, hat einen KIT-Wert für eine Fettdurchlässigkeit bzw. Fettdichtigkeit in einem Bereich von 10 bis 14. Die Messung der Fettdichtigkeit eines Papiers kann über den KIT-Test (Tappi) ermittelt werden. Dabei wird sehr dünnflüssiges Öl (Palmöl) auf eine zu untersuchende Papieroberfläche getropft. Bildet sich auf der Rückseite, d. h. auf der Seite, die der Seite gegenüberliegt, auf die das Öl aufgetropft wurde, um diesen Tropfen ein "Hof", so gilt der Test als nicht bestanden. Durch Verdünnung des Palmöls mit Lösemitteln (z. B. Toluol) wird das Öl aggressiver und es durchdringt die Papieroberfläche leichter. Ein KIT-Wert von 1 bedeutet, dass bereits das unverdünnte Palmöl die Papieroberfläche durchdringen konnte. Bei einem KIT-Wert von 9 hält die Oberfläche auch der "aggressiven" Flüssigkeit stand, das Papier ist somit sehr fettabweisend. Der KIT-Wert von fettdichten Papieren liegt normalerweise bei 5 bis 7 KIT. Eine Heißsiegelfähigkeit liegt bei etwa 5N/15mm.

Gemäß einer modifizierten Ausführungsform ist vorgesehen, dass ein Radius der Abrundung umgekehrt proportional zu einem Wert einer Reißfestigkeit nach DIN EN ISO 1974 - 2012-09, insbesondere zu einem Wert eines Flächengewichts, einer Umschlagmaterial-Schichtanordnung einer Verpackung, insbesondere einer Papierverpackung, zum Verpacken der Schneideinrichtung angepasst ausgestaltet ist. In anderen Worten, je höher die Reißfestigkeit des Papiers, desto geringer kann der Radius der Schneide sein. Umgekehrt, je größer der Radius der Schneide ist, desto geringer kann die Reißfestigkeit der Umschlagmaterial-Schichtanordnung sein. In anderen Worten insbesondere, je höher das Flächengewicht des Papiers, desto geringer kann der Radius der Schneide sein. Umgekehrt, je größer der Radius der Schneide ist, desto geringer kann das Flächengewicht der Umschlagmaterial-Schichtanordnung sein. Hiermit kann bevorteilt werden, dass die Klinge bei der Handhabung nicht mit einer Spitze der Schneide aus der Verpackung heraussticht. Auch beim Auspacken der Klinge aus dem Verpackungsmaterial wird die Verletzungsgefahr für den Anwender reduziert. Beispielhaft kann ein Radius von 3 mm bei einem Flächengewicht von 70 g/m^2 gewählt werden, wobei sich mit ansteigendem Flächengewicht auch die Reißfestigkeit erhöht.

Das Klingenblatt bzw. die Schneideinrichtung sind bevorzugt plan ausgebildet.

Gemäß einer modifizierten Ausführungsform ist vorgesehen, dass die Schneide als geradlinige Schneidkante ausgestaltet ist. Solchen Schneidkanten sind insbesondere beim Entvliesen/ Entschwarten vorteilhaft.

Gemäß einer modifizierten Ausführungsform ist vorgesehen, dass die Abrundung oder die Abrundungen ausschließlich an der Schneide ausgebildet ist/sind. Die Abrundung begrenzt hierbei (jeweils) eine Schneidkante. Die Abrundung verläuft nur an einem bezüglich des Klingenblatts abgeschrägten Teil der Schneide. Mit einer lediglichen Ausprägung der Abrundung an der Schneide wird wenig Material von der Klinge entfernt.

Gemäß einer modifizierten Ausführungsform ist vorgesehen, dass die Schneide, insbesondere die Schneidkante, zwischen der Abrundung und der Seite, insbesondere einer Seitenkante der Seite, eine geradlinige Kante aufweist. Dies bevorzugt ein passgenaues Einsetzen der Schneideinrichtung in eine Maschine zum Entvliesen/ Entschwarten.

Gemäß einer modifizierten Ausführungsform ist vorgesehen, dass ein Teil oder alle das Klingenblatt umgrenzenden Seiten, insbesondere Kanten, über Abrundungen miteinander verbunden sind. Dies bevorteilt, dass die Schneideinrichtung in eine einfachere Verpackung eingepackt werden kann, d. h. in eine Verpackung mit einem geringeren Flächengewicht bzw. einer geringeren Reißfestigkeit, eingepackt werden kann.

Gemäß einer modifizierten Ausführungsform ist vorgesehen, dass ein Radius der Abrundung in einem Bereich von einschließlich 1 mm bis einschließlich 5 mm liegt. Die gewählten Radien haben sich als besonders vorteilhaft zusammen mit einer verwendeten Papierverpackung herausgestellt. Auch kann die Abrundung mit dem gewählten Radius dazu beitragen, dass die Klinge länger scharf bleibt, da die Abrundung das Risiko von Mikroausbrüchen oder Rissen verringert. Dadurch wird die Lebensdauer der Klinge verlängert und sie muss weniger häufig ausgetauscht werden.

Gemäß einer modifizierten Ausführungsform ist vorgesehen, dass ein Radius der Abrundung ein Aspektverhältnis zu einer Länge der Schneide, insbesondere der Schneidkante, oder zu einer Länge der Klinge in einem Bereich von 6,7 × 10^-4 bis 0,2 aufweist.

Gemäß einer modifizierten Ausführungsform ist vorgesehen, dass ein Radius der Abrundung ein Aspektverhältnis zu einer Breite der Klinge in einem Bereich von 2,5 × 10^-2 bis 0,63 aufweist.

Gemäß einer modifizierten Ausführungsform ist vorgesehen, dass ein Radius der Abrundung ein Aspektverhältnis zu einer Dicke der Klinge in einem Bereich von 0,63 bis 25 aufweist.

Gemäß einer modifizierten Ausführungsform ist vorgesehen, dass die Umschlagmaterial-Schichtanordnung Faltlinien aufweist, um die Schneide der Schneideinrichtung mit zumindest zwei Lagen der Umschlagmaterial-Schichtanordnung zu umhüllen. Hierdurch ist die Schneide noch besser mechanisch geschützt.

Gemäß einer modifizierten Ausführungsform ist vorgesehen, dass die Umschlagmaterial-Schichtanordnung quer zu den Faltlinien verlaufende weitere Verbindungsbereiche aufweist, wobei die Verbindungsbereiche gemeinsam eine Verpackungskammer zur Verpackung der Schneideinrichtung umschließen, wobei ein Abstand der weiteren Verbindungsbereiche 103 bis 106 Prozent, insbesondere 105 Prozent einer Länge der Schneideinrichtung beträgt. Hiermit ist mit Vorteil ein Bereich, an dem die Verpackung eingerissen werden kann, vergrößert. Dies verringert weiter eine Verletzungsgefahr.

Gemäß einer modifizierten Ausführungsform ist vorgesehen, dass die Umschlagmaterial-Schichtanordnung im Querschnitt quer zu den längeren Seiten eine T-Form aufweist, wobei ein vertikal oder quer verlaufender T-Stammschenkel durch den Verbindungsbereich der Umschlagmaterial-Schichtanordnung gebildet ist und ein horizontal verlaufender T-Querschenkel durch die Umschlagmaterial-Schichtanordnung ausschließlich des Verbindungsbereichs gebildet ist.

Gemäß einer modifizierten Ausführungsform ist vorgesehen, dass der T-Stammschenkel eine Länge in einem Bereich von 2/3 B bis B/2 +x aufweist, wobei B eine Länge des T-Querschenkels ist und x größer als B/2 ist.

Gemäß einer modifizierten Ausführungsform ist vorgesehen, dass der T-Stammschenkel in einem Bereich von B/2 bis 2/3 B bei einer Längenmessung von links nach rechts an dem T-Querschenkel angeordnet ist.

Gemäß einer modifizierten Ausführungsform ist vorgesehen, dass der T-Stammschenkel an dem T-Querschenkel angeordnet ist, um eine U-Form zu bilden, wobei die U-Form mit ihren Schenkeln ausgebildet ist, um den T-Querschenkel zu umklammern. Hierbei geht es vor allem darum, die Seite der Klinge mit zwei Materialschichten der Verpackung zu versehen, an welcher die Schneide ist. In anderen Worten, die Verpackung soll die Schneide mit zwei Materialschichten ummanteln. Eine erste Materialschicht ist die Materialschicht des T-Querschenkels. Die zweite Materialschicht ist die Materialschicht des T-Stammschenkels, welcher ebenfalls die Schneide ummantelt.

### Kurze Beschreibung der Zeichnungen

Nachfolgend wird die Erfindung unter Bezugnahme auf die anliegenden Zeichnungen anhand bevorzugter Ausführungsbeispiele näher erläutert. Die Formulierung Figur ist in den Zeichnungen mit Fig. abgekürzt.

In den Zeichnungen zeigen
- Fig. 1: eine schematische Ansicht einer Schneideinrichtung gemäß einer ersten Ausführungsform in zwei Ansichten;
- Fig. 2a: eine schematische Ansicht einer Schneideinrichtung gemäß einer zweiten Ausführungsform in zwei Ansichten;
- Fig. 2b: die Ansicht einer Schneideinrichtung gemäß der zweiten Ausführungsform in den zwei Ansichten mit Bemaßungen;
- Fig. 3: eine schematische Ansicht einer Schneideinrichtung gemäß einer dritten Ausführungsform in zwei Ansichten;
- Fig. 4: eine schematische Ansicht einer Schneideinrichtung gemäß einer vierten Ausführungsform in zwei Ansichten;
- Fig. 5: eine schematische Ansicht einer Umschlagmaterial-Schichtanordnung einer Verpackung der Schneideinrichtung gemäß einem ersten Ausführungsbeispiel;
- Fig. 6a: eine schematische erste Ansicht einer Verpackung der Schneideinrichtung gemäß einem ersten Ausführungsbeispiel;
- Fig. 6b: eine schematische zweite Ansicht einer Verpackung der Schneideinrichtung gemäß einem ersten Ausführungsbeispiel;
- Fig. 7a: eine schematische Ansicht einer Verpackung der Schneideinrichtung gemäß einem zweiten Ausführungsbeispiel in einer ersten Faltung; und
- Fig. 7b: eine schematische Ansicht der Verpackung der Schneideinrichtung gemäß dem zweiten Ausführungsbeispiel in einer zweiten Faltung.

### Detaillierte Beschreibung der Ausführungsbespiele

Die beschriebenen Ausführungsbeispiele sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wird, kann eigenständig oder in Kombination mit anderen Merkmalen in einem beliebigen anderen Ausführungsbeispiel genutzt werden. Jedes Merkmal, das für ein Ausführungsbeispiel einer bestimmten Anspruchskategorie beschrieben wird, kann auch in entsprechender Weise in einem Ausführungsbeispiel einer anderen Anspruchskategorie eingesetzt werden. Da wo zweckdienlich, wurden an allen Figuren, nicht ausschließend, die Abschnitte der Einrichtung/der Verpackung mit Bezugszeichen versehen. Der Übersichtlichkeit halber wurden gleichnamige Abschnitte jedoch nur teilweise, insbesondere dort wo auch in der Figurenbeschreibung erwähnt, mit Bezugszeichen versehen.

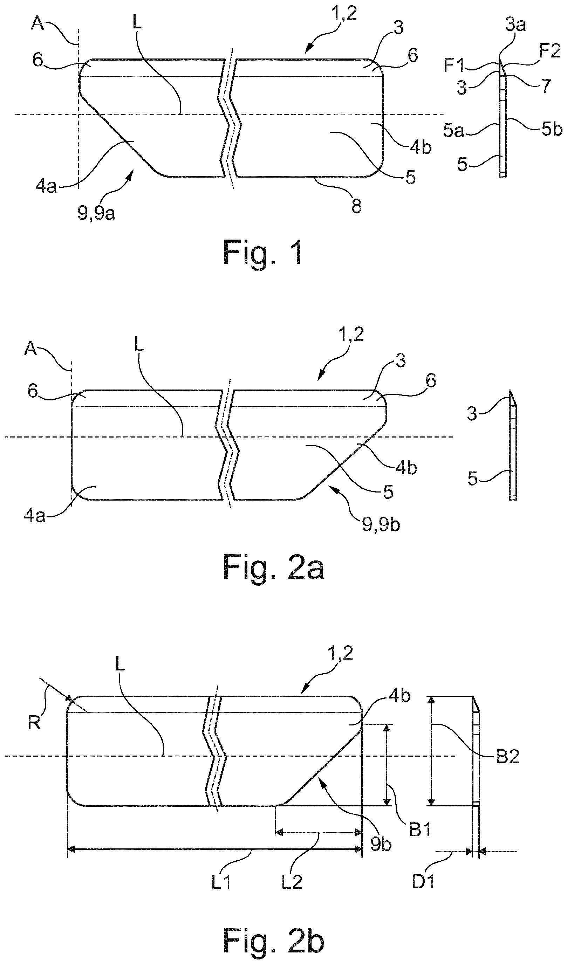

Figur 1 zeigt eine schematische Ansicht einer Schneideinrichtung 1 gemäß einer ersten Ausführungsform in zwei Ansichten. Die erste Ansicht (Figur 1, links) ist eine Draufsicht auf die Schneideinrichtung 1, bei der der Aufbau der Schneideinrichtung in Längsrichtung längs der Längsachse L veranschaulicht ist. Die zweite Ansicht (Figur 1, rechts) ist eine Draufsicht auf die Schneideinrichtung 1, bei der der Aufbau der Schneideinrichtung in Querrichtung zu der Längsachse L, am Schnittpunkt der Achse L mit einer Achse A, veranschaulicht ist. Die Schneideinrichtung 1 ist zum Entschwarten und zum Entvliesen von Nahrungsmitteln, z.B. Fleisch, insbesondere Rinder-, Schweine- oder Lammfleisch, oder Fisch, geeignet. Die Schneideinrichtung 1 wird zu diesem Zweck in einer Maschine befestigt, welche vorliegend nicht gezeigt ist. Die Maschine kann eine Maschine geeignet zum Enthäuten und Entschwarten sein. Die Schneideinrichtung 1 weist eine Klinge 2 auf. Die Klinge 2 weist eine Schneide 3 auf. Denkbar ist auch eine Klinge 2 mit zwei Schneiden 3, zum Beispiel. Die Schneide(n) 3 und die zur/zu den Schneide(n) 3 quer verlaufenden Seiten 4a, 4b umschließen zusammen ein Klingenblatt 5. Im Fall von einer Schneide 3 umschließt die Schneide 3, ein, z. B. parallel zur Schneide 3 verlaufender, Klingenrücken 8 und die zur Schneide 3 quer verlaufenden Seiten 4a, 4b zusammen das Klingenblatt 5.

Die Schneide 3 erstreckt sich bei dem vorliegenden Ausführungsbeispiel parallel zur Längsachse L der Klinge 2. Bei dem vorliegenden Ausführungsbeispiel weist die Klinge 2 eine 1-schneidige Schneideform auf. Die Klinge 2 kann, je nach Verwendungszweck, auch eine zweischneidige Klinge 2 aufweisen. Bei dem vorlegenden Ausführungsbeispiel handelt es sich weiterhin um eine Schneide 3 mit einer Einfachfacette. Dies lässt sich anhand der Draufsicht auf die Klinge 2 an der zur Längsachse L verlaufenden Querachse A (siehe Figur 1, rechte Ansicht) nachvollziehen. Die Schneide 3 der Klinge 2 ist aus zwei Flächen F1 und F2 gebildet, welche an einer Schneidkante 3a zusammentreffen. Im Querschnitt, d.h. im Schnitt durch die Klinge 2 entlang der Achse A, verläuft die Fläche F1 parallel zu einer ersten Klingenblatt-Oberfläche 5a und geht zugleich in die Klingenblattoberfläche 5a ohne eine Abstufung über. Im Querschnitt, d.h. im Schnitt durch die Klinge 2 entlang der Achse A, verläuft die Fläche F2 schräg zu einer zweiten Klingenblatt-Oberfläche 5b und geht zugleich in die zweite Klingenblattoberfläche 5b mit einer Abkantung 7 über. Die Abkantung 7 ist eckig.

Die Klinge 2 ist bei allen Ausführungsbeispielen der Figuren 1 bis 4 mit einer geradlinigen, parallel zur Längsachse L der Klinge 2 verlaufenden Schneidkante 3a ausgestaltet. Die Schneidkante 3a weist jeweils an ihren Enden Abrundungen 6 auf. Die Abrundungen 6 sind dabei im schneidenden Bereich der Schneide 3 angeordnet. In anderen Worten, die Abrundungen 6 verlaufen durch die Schneide 3. Vorliegend erstrecken sie sich bis zu den Seiten 4a und 4b. In anderen Worten, die Abrundungen 6 erstrecken sich von der Schneidkante 3a bis zu der Abkantung 7, welche die Schneide 3 nicht als Schneide 3 fungierenden Klingenblatt 5 begrenzt. Denkbar ist, dass die Schneidkante 3a an nur einem Ende über eine Abrundung 6 in eine der ersten 4a oder der zweiten Seite 4b übergeht.

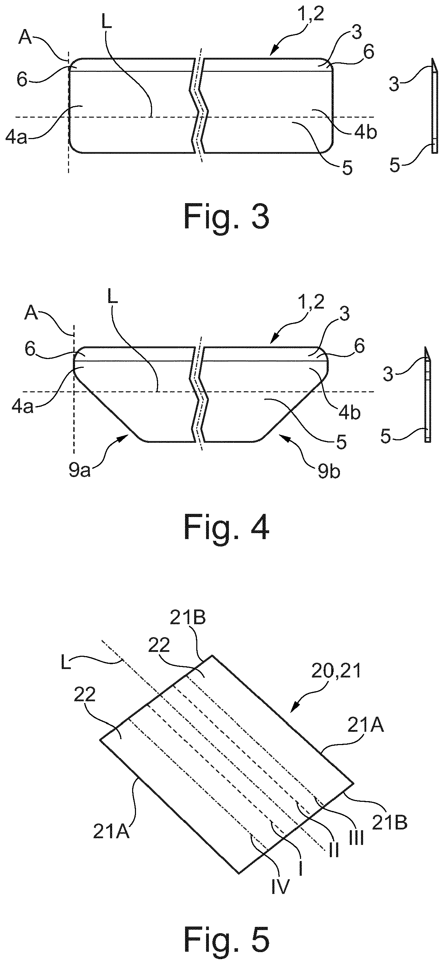

Die Seiten 4a oder 4b sind je nach Einbauweise in die Maschine ausgestaltet. Beispielsweise denkbar sind Klingen 2 mit einer Ausklinkung 9 (siehe Figuren 1 und 2a, 2b) oder zwei Ausklinkungen 9a, 9b (siehe Figur 4). Denkbar sind zudem Klingen 2 ohne Ausklinkungen 9, 9a, 9b (siehe Figur 3).

Bei den gezeigten Ausführungsbeispielen hat die Schneidkante 3a jeweils die größte Länge. Denkbar ist auch, dass die Schneidkante 3a eine geringere Länge aufweist als eine längs zur Längsachse L gegenüberliegende Kante. Es kann sich um trapezförmige Klingen 2 handeln oder die Klinge 2 kann eine alternative Außenumrisskantenform haben. Denkbar ist eine Klinge 2, bei der die Schneidkante 3a in die Seite 4a oder 4b über einen stumpfen Winkel von 150 Grad übergeht. Demnach geht die Schneidkante 3a in die Seite 4a oder 4b nicht kontinuierlich, sondern über den stumpfen Winkel abgewinkelt über. Die Abrundung 6 ist demnach durch den stumpfen Winkel gebildet. Der stumpfe Winkel zwischen der Schneidekante 3a und der Seite 4a oder 4b kann durch eine Ausklinkung 9a oder 9b gebildet sein. Weiterhin kann eine solche Klinge 2 weitere Abrundungen 6 aufweisen. Über die Abrundungen 6 kann die Ausklinkung 9a oder 9b dann in eine weitere Ausklinkung 9a oder 9b übergehen.

Denkbar ist eine Ausführungsform, bei der die Schneidkante 3a an einer ersten Seite über einen stumpfen Winkel von 150 Grad in eine Ausklinkung 9a übergeht. Dann geht die Ausklinkung 9a kontinuierlich, d.h., rund in eine weitere Ausklinkung 9a über. Beide Ausklinkungen 9a können wiederrum einen spitzen Winkel zueinander einschließen. Die der Schneidkante 3a fernliegendere Ausklinkung 9a der beiden Ausklinkungen 9a geht dann wiederum in eine zur Schneidkante 3a parallel verlaufende und geradlinig ausgebildete Außenumrisskante der Klinge 2 über. Diese geradlinige Außenumrisskante geht dann wiederum über eine Ecke, beispielsweise mit einem Winkel von 90 Grad, in eine Seite 4b über, welche wiederum über einen stumpfen Winkel in eine Abkantung 9b übergeht. Die Abkantung 9b geht dann wiederum in die Schneidkante 3a über den stumpfen Winkel von 150 Grad, d.h. über eine Abrundung 6 in die Schneidkante 3a über.

Denkbar ist eine Ausführungsform, bei der die Schneidkante 3a an einer ersten Seite über einen stumpfen Winkel von 150 Grad in eine Ausklinkung 9a übergeht. Dann geht die Ausklinkung 9a über eine Ecke in eine Seite 4a über, wobei die Ausklinkung 9a und die Seite 4a einen Winkel von 120 Grad einschließen. Die Seite 4a geht dann wiederum in die zur Schneidkante 3a parallel verlaufende und geradlinig ausgebildete Außenumrisskante über.

Denkbar ist eine Ausführungsform, bei der die Schneidkante 3a an einer ersten Seite über eine runde Abrundung 6, d.h. kontinuierlich in eine Ausklinkung 9a übergeht. Dann geht die Ausklinkung 9a diskontinuierlich, d.h. mit einem Winkel von 120 Grad in eine Seite 4a über. Die Seite 4a geht in eine weitere Ausklinkung 9a mit einem Winkel von 135 Grad über. Beide Ausklinkungen 9a können wiederrum einen spitzen Winkel zueinander einschließen. Die der Schneidkante 3a fernliegendere Ausklinkung 9a der beiden Ausklinkungen 9a geht dann wiederum in eine zur Schneidkante 3a parallel verlaufende und geradlinig ausgebildete Außenumrisskante der Klinge 2 über.

Denkbar ist eine Ausführungsform, bei der die Schneidkante 3a an einer ersten Seite über einen stumpfen Winkel von 150 Grad in eine Ausklinkung 9a übergeht. Dann geht die Ausklinkung 9a diskontinuierlich, d.h. mit einem Winkel von 120 Grad in eine Seite 4a über. Die Seite 4a geht in eine weitere Ausklinkung 9a mit einem Winkel von 135 Grad über. Beide Ausklinkungen 9a können wiederrum einen spitzen Winkel zueinander einschließen. Die der Schneidkante 3a fernliegendere Ausklinkung 9a der beiden Ausklinkungen 9a geht dann wiederum in eine zur Schneidkante 3a parallel verlaufende und geradlinig ausgebildete Außenumrisskante der Klinge 2 über.
Denkbar ist, dass lediglich an der Schneidkante 3a einseitig, d. h. an der Seite 4a oder Seite 4b, oder beidseitig eine Schneidausklinkung mit einem stumpfen Winkel von 150 Grad zur Schneidkante 3a vorgesehen ist. In anderen Worten, die Schneidausklinkung ist Teil des schneidenden Teils der Klinge 2. Die Schneidausklinkung geht dann wiederum optional in die Seite 4a oder 4b über, und zwar über einen Winkel von 120 Grad oder über eine runde Abrundung 6.

Denkbar ist auch, dass eine Schneidausklinkung an der Klinge 2 ausgebildet ist, welche einen stumpfen Winkel von 165 Grad hat.

Denkbar sind Schneidausklinkungen an beiden Seiten der Schneidkante 3a oder nur einseitig an der Schneidkante 3a.

Bei den vorbeschriebenen denkbaren Ausführungsformen, bei denen auch Abrundungen 6 in spitzen Winkeln von 150 Grad vorhanden waren, kann die Länge L2 der Klinge 2 in Richtung der Längsachse L im Bereich der Ausklinkung(en) 9a oder 9b 10 mm +/- 0,3 mm betragen.

In Figur 2b ist eine Schneideinrichtung 1 mit beispielhaften Bemaßungen gezeigt. Die Klinge 2 der Schneideinrichtung 1 hat eine Länge L1 in Richtung der Längsachse L von einem Nennmaß mit einer Toleranz von +/- 1,0 mm. Die zweite Seite 4b weist eine Ausklinkung 9b auf. Die Länge L2 der Klinge 2 in Richtung der Längsachse L im Bereich der Ausklinkung 9b ist 14 mm +/- 0,3 mm. Die Breite B1 der Klinge 2 senkrecht zur Längsachse L im Bereich der Ausklinkung 9b ist ebenfalls 14 mm +/- 0,3 mm. Die Breite B2 der Klinge 2 senkrecht zur Längsachse L ist 20 mm +/- 0,1 mm. Der projizierte Radius R an der Abrundung 6 ist 3 mm. Vorliegend ist der Radius an jedem Abschnitt, an welchem zwei Kanten aufeinandertreffen, 3 mm. Die Dicke D1 der Klinge 2 senkrecht zur Längsachse L ist 1 mm +/- 0,03 mm.

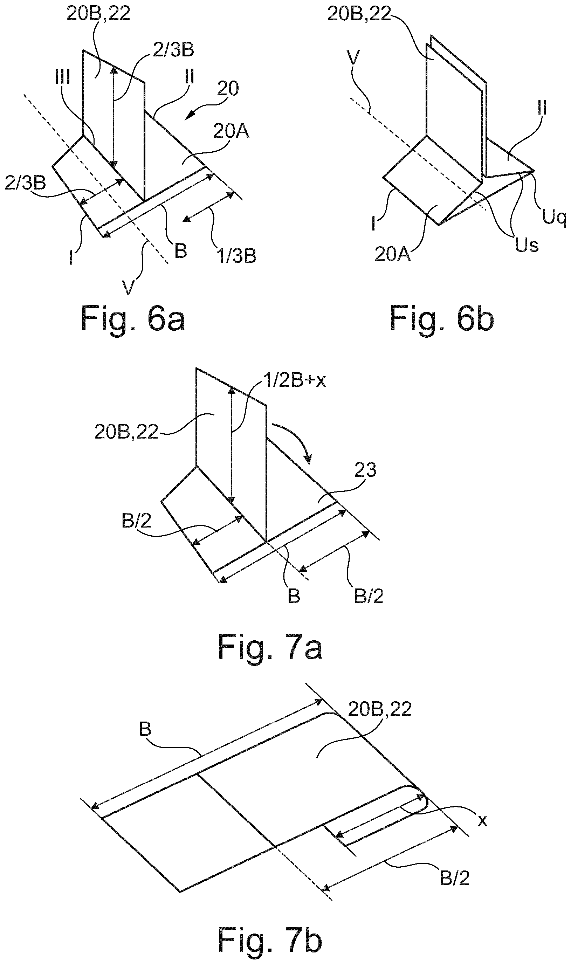

In Figur 5 ist eine Ausführungsform einer Umschlagmaterial-Schichtanordnung 21 einer möglichen Verpackung 20 der Schneideinrichtung 1 gezeigt. Die Schichtanordnung 21 kann für eine Verpackung 20 der Ausführungsbeispiele der Figuren 6a/6b oder 7a/7b verwendet werden. Entsprechend der Ausgestaltung der Ausführungsbeispiele der Figuren 6a/6b oder 7a/7b wären dann die Faltlinien I, II, III, IV anzupassen. Die Umschlagmaterial-Schichtanordnung 21 wird zunächst an den Faltlinien I, II gefalten. Der Abstand der Faltlinien I, II ist so gewählt, dass die Schneideinrichtung 1 zwischen den Faltlinien I, II anordenbar ist. Danach wird die Umschlagmaterial-Schichtanordnung 21 an den Linien III und IV gefalten und die Bereiche 22 der Umschlagmaterial-Schichtanordnung 21 miteinander verklebt. Alternativ denkbar ist, die Umschlagmaterial-Schichtanordnung 21 zunächst an den Faltlinien III und IV zusammen zu falten und anschließend an I und II. Alle Faltlinien I, II, III, IV erstrecken sich längs der Längsachse L der Schneideinrichtung 1, zumindest in den Fällen, in denen die Schneideinrichtung 1 so ausgebildet ist wie gemäß den Ausführungsbeispielen der Figuren 1 bis 4 vorgesehen ist. Bei dem Ausführungsbeispiel der Figur 7a/7b muss an der Umschlagmaterial-Schichtanordnung 21 zumindest eine weitere Faltlinie vorgesehen sein, um die Umschlagmaterial-Schichtanordnung 21 mit zwei Lagen der Umschlagmaterial-Schichtanordnung 21 um die Schneide 3 der Schneideinrichtung 1 anordnen zu können.

Die längeren Seiten 21A der Umschlagmaterial-Schichtanordnung 21 und die kürzeren Seiten 21B stehen bei der vorliegenden Umschlagmaterial-Schichtanordnung 21 senkrecht aufeinander. Denkbar ist, dass je nach Ausbildung der Schneideinrichtung 1 die Seiten 21A, 21B entsprechend angepasst ausgestaltet sind.

In Figur 6a ist eine Verpackung 20 gemäß einem möglichen Ausführungsbeispiel gezeigt. Die Verpackung 20 weist einen Verpackungskorpus 20A und eine Öffnungslasche 20B auf. Die Öffnungslasche 20 B erstreckt sich wie eine Fahne von dem Verpackungskorpus 20A ab. Bei dem vorliegenden Beispiel entspricht die Öffnungslasche 20B dem Verbindungsbereich 22. In anderen Worten, der Verbindungsbereich 22 ist gleich groß wie die Öffnungslasche 20B. Die Öffnungslasche 20B ist demnach in ihrem gesamten Bereich im vorliegenden Ausführungsbeispiel durch zwei Lagen der Umschlagmaterial-Schichtanordnung 21 gebildet. In anderen Worten, zwei Teiloberflächen der Umschlagmaterial-Schichtanordnung 21 sind miteinander im Verbindungsabschnitt 22 verbunden. Die Verbindung zwischen den Teiloberflächen kann adhäsiv sein.

Wie in Figur 5 gezeigt, ist die Umschlagmaterial-Schichtanordnung 21, aus welcher die Verpackung 20 der Figur 6a gebildet ist, viereckig. In Figur 6a sind die Lagen der Umschlagmaterialschichtanordnung 21 zusammengelegt und miteinander verbunden. Sie sind nicht mehr als einzelne Lagen erkennbar. Erkennbar ist hingegen der durch die Faltlinien I, II, III gebildete Korpus 20A. In Figur 6b sind die Lagen der Umschlagmaterialschichtanordnung 21 zusammengelegt und miteinander verbunden und als einzelne Lagen erkennbar gezeigt. Erkennbar ist demnach, dass die Umschlagmaterial-Schichtanordnung 21 durch die Faltung an den ersten Faltlinien I, II im Querschnitt zur Längsachse V U-förmig mit einem U-Querbalken Uq und zwei U-Stammbalken Us ausgestaltet ist. Die Verpackung 20 kann so ausgestaltet sein, dass sich die Längsachse V der Verpackung 20 parallel zur Längsachse L der Schneideinrichtung 1 erstreckt. Ein Abstand FI-II der ersten Faltlinien I, II beträgt 135 Prozent einer Breite B2 der Klinge 2 bzw. der Schneideinrichtung 1. Der Abstand FI-II entspricht der Breite B der Umschlagmaterial-Schichtanordnung 21 bzw. des T-Querschenkels der Verpackung. Der T-Querschenkel der Verpackung 20 ist aus den U-Stammschenkeln Us in Anteilen und dem vollständigen U-Querschenkel Uq der Umschlagmaterial-Schichtanordnung 21 gebildet.

Bei dem Ausführungsbeispiel der Figuren 6a/6b haben die U-Stammschenkel Us unterschiedliche Längen. Ein erster U-Stammschenkel Us an der Faltlinie I hat eine Länge von 2/3 der Länge des U-Querschenkels Uq bzw. 2/3 der Länge des T-Querschenkels der Verpackung 20. Ein zweiter U-Stammschenkel an der Faltlinie II hat eine Länge von 1/3 der Länge des U-Querschenkels Uq bzw. 1/3 der Länge des T-Querschenkels der Verpackung 20. Die Öffnungslasche 20B hat die Länge 2/3 B, d. h. 2/3 der Länge des U-Querschenkels Uq bzw. 2/3 der Länge des T-Querschenkels der Verpackung 20.

Bei dem Ausführungsbeispiel der Figuren 7a/7b haben die U-Stammschenkel Us gleiche Längen. Beide Stammschenkel Us haben eine Länge von einer Hälfte der Länge des U-Querschenkels Uq bzw. von einer Hälfte der Länge des T-Querschenkels der Verpackung 20. Die Öffnungslasche 20B hat die Länge 1/2 B+x, d. h. ein Überschuss x zu einer Hälfte der Länge des U-Querschenkels Uq bzw. ein Überschuss x zu einer Hälfte der Länge des T-Querschenkels der Verpackung 20. Der Überschuss x ist größer als B/2. Bei diesem Ausführungsbeispiel wird die Öffnungslasche 20B um den Verpackungskorpus 20A herumgeführt. Die Schneide 3 ist in der Verpackung 20 in Richtung der Faltlinie II ausgerichtet. Die Schneide 3 ist damit an der Schneidkante 3a von zwei Lagen der Umschlagmaterial-Schichtanordnung 21 ummantelt. In anderen Worten, es ist die Klinge 2 mit drei Materiallagen geschützt., wobei eine Materiallage von einem umhüllenden Verpackungskorpus 20A ist und zwei Materiallagen von der Lasche 20B stammen.

Nur in Figur 7a einseitig dargestellt, jedoch an beiden Enden der Verpackung 20 weist die Umschlagmaterial-Schichtanordnung 21 quer zu den Faltlinien I, II, III, IV verlaufende weitere Verbindungsabschnitte 23 auf, wobei die Verbindungsabschnitte 22, 23 gemeinsam eine vollständig geschlossene Verpackungskammer zur Verpackung 20 der Schneideinrichtung 1 umschließen, wobei ein Abstand der weiteren Verbindungsbereiche 23 103 bis 106 Prozent, insbesondere 105 Prozent einer Länge der Schneideinrichtung 1 beträgt.

### Bezugszeichenliste

- 1: Schneideinrichtung
- 2: Klinge
- 3: Schneide
- 3a: Schneidkante
- 4a: erste Seite quer zur Schneide
- 4b: erste Seite quer zur Schneide
- 5: Klingenblatt
- 5a: erste Klingenblatt-Oberfläche
- 5b: zweite Klingenblatt-Oberfläche
- 6: Abrundung
- 7: Abkantung
- 8: Klingenrücken
- 9: Ausklinkung
- 9a: erste Ausklinkung
- 9b: zweite Ausklinkung

- 20: Verpackung
- 20A: Verpackungskorpus
- 20B: Öffnungslasche der Verpackung
- 22: Verbindungsabschnitt
- 23: weiterer Verbindungsabschnitt

- x: Überschuss zu einer halben Breite des T-Querschenkels der Verpackung
- A: quer zu einer Klingen-Längsachse verlaufende Achse
- B: Länge des T-Querschenkels der Verpackung
- L: Klingen-Längsachse
- R: Radius
- Uq: U-Querbalken, gebildet durch erste Faltlinien
- Us: U-Stammbalken, gebildet durch erste Faltlinien

- B1: Breite der Klinge im Bereich der Ausklinkung
- B2: Breite der Klinge/Schneideinrichtung insgesamt
- D1: Dicke der Klinge
- F1: erste Fläche an Schneidkante
- F2: zweite Fläche an Schneidkante
- FI-II: Abstand der Faltlinien
- L1: Länge der Klinge
- L2: Länge der Ausklinkung in Richtung der Längsachse

## Patentansprüche

1. Schneideinrichtung (1) zum Entschwarten oder Entvliesen, die Schneideinrichtung (1) aufweisend eine sich in einer Längsachse (L) erstreckende Klinge (2), die Klinge (2) aufweisend
- zumindest eine sich entlang der Längsachse (L) der Klinge (2) erstreckende längliche Schneide (3),
- zwei quer zur Schneide (3) verlaufende Seiten (4a, 4b), insbesondere zwei quer zur Schneide (3) verlaufende Seitenkanten, und
- ein Klingenblatt (5), wobei die Schneide (3) und die beiden Seiten (4a, 4b) das Klingenblatt (5) begrenzen, und
wobei die Schneide (3) über eine Abrundung (6) mit zumindest einer der beiden Seiten (4a, 4b) verbunden ist.

2. Schneideinrichtung (1) nach Anspruch 1, wobei ein Radius der Abrundung (6) umgekehrt proportional zu einem Wert einer Reißfestigkeit nach DIN EN ISO 1974 - 2012-09 einer Umschlagmaterial-Schichtanordnung (21) einer Verpackung, insbesondere einer Papierverpackung, zum Verpacken der Schneideinrichtung (1) angepasst ausgestaltet ist.

3. Schneideinrichtung (1) nach Anspruch 1 oder 2, wobei die Abrundung (6) oder die Abrundungen (6) ausschließlich an der Schneide (3) ausgebildet ist/sind; und/oder wobei die Schneide (3), insbesondere die Schneidkante (3a), zwischen der Abrundung (6) und der Seite (4a, 4b), insbesondere einer Seitenkante der Seite (4a, 4b), eine geradlinige Kante aufweist.

4. Schneideinrichtung (1) nach einem der vorangehendenden Ansprüche, wobei ein Teil oder alle das Klingenblatt (5) umgrenzenden Seiten (4a, 4b), insbesondere Kanten, über Abrundungen (6) miteinander verbunden sind.

5. Schneideinrichtung (1) nach einem der vorangehendenden Ansprüche, wobei ein Radius (R) der Abrundung (6) ein Aspektverhältnis zu einer Länge der Schneide (3), insbesondere der Schneidkante (3a), oder zu einer Länge (L1) der Klinge (2) in einem Bereich von 6,7 × 10^-4 bis 0,2 aufweist.

6. Schneideinrichtung (1) nach einem der vorangehendenden Ansprüche, wobei ein Radius (R) der Abrundung (6) ein Aspektverhältnis zu einer Breite (B2) der Klinge (2) in einem Bereich von 2,5 × 10^-2 bis 0,63 aufweist.

7. Schneideinrichtung (1) nach einem der vorgehenden Ansprüche, wobei ein Radius (R) der Abrundung (6) ein Aspektverhältnis zu einer Dicke (D1) der Klinge (2) in einem Bereich von 0,63 bis 25 aufweist.

8. Verpackung (20) für eine Schneideinrichtung (1) zum Entschwarten und Entvliesen nach einem der vorgehenden Ansprüche, die Verpackung (20) aufweisend einen Verpackungskorpus (20A) und eine an dem Verpackungskorpus (20A) ausgebildete Öffnungslasche (20B) zum Öffnen der Verpackung (20), die Verpackung (20) aufweisend eine, insbesondere viereckige, Umschlagmaterial-Schichtanordnung (21) mit zumindest einer Materialschicht mit zwei gleich langen, längs einer Längsachse (V) erstreckenden, längeren Seiten (21A) und zwei gleich langen, kürzeren Seiten (21B),
wobei die Umschlagmaterial-Schichtanordnung (21) zwei erste Faltlinien (I, II) aufweist, um die Schneideinrichtung (1) zwischen den ersten Faltlinien (I, II) einzubetten, wobei die Umschlagmaterial-Schichtanordnung (21) durch die Faltung an den ersten Faltlinien (I, II) im Querschnitt zur Längsachse (V) U-förmig mit einem U-Querbalken (Uq) und zwei U-Stammbalken (Us) ausgestaltet ist,
wobei ein Abstand FI-II der ersten Faltlinien (I, II) 120 bis 145 Prozent, insbesondere 135 Prozent einer Breite (B2) der Schneideinrichtung (1) beträgt,
wobei die Umschlagmaterial-Schichtanordnung (21) zumindest eine zweite Faltlinie (III) aufweist, wobei die zweite Faltlinie (III) zu einer der ersten Faltlinien (I, II) im Zickzack gefalten ist,
wobei ein durch die Faltlinien (I, II, III) eingegrenzter Bereich der Umschlagmaterial-Schichtanordnung (21) den Verpackungskorpus (20A) bildet,
ein außerhalb des eingegrenzten Bereichs liegender Bereich der Umschlagmaterial-Schichtanordnung (21) die Öffnungslasche (20B) bildet, und
wobei die zwei längeren Seiten (21A) der Umschlagmaterial-Schichtanordnung (21) in einem im Bereich der Öffnungslasche (20B) liegenden Verbindungsbereich (22) miteinander verbunden sind.

9. Verpackung (20) nach dem vorangehenden Anspruch, wobei die Umschlagmaterial-Schichtanordnung (21) Faltlinien (I, II, III, IV) aufweist, um die Schneide (3) der Schneideinrichtung (1) mit zumindest zwei Lagen der Umschlagmaterial-Schichtanordnung (21) zu umhüllen.

10. Verpackung (20) nach dem vorangehenden Anspruch 8 oder 9, wobei die Umschlagmaterial-Schichtanordnung (21) quer zu den Faltlinien (I, II, III, IV) verlaufende weitere Verbindungsabschnitte (23) aufweist, wobei die Verbindungsabschnitte (22, 23) gemeinsam eine geschlossene Verpackungskammer zur Verpackung der Schneideinrichtung (1) umschließen, wobei ein Abstand der weiteren Verbindungsbereiche (23) 103 bis 106 Prozent, insbesondere 105 Prozent einer Länge der Schneideinrichtung (1) beträgt.

11. Verpackung (20) nach einem der vorgehenden Ansprüche 8 bis 10, wobei die Umschlagmaterial-Schichtanordnung (21) im Querschnitt quer zu den längeren Seiten (21B) eine T-Form aufweist, wobei ein vertikal oder quer verlaufender T-Stammschenkel durch den Verbindungsbereich der Umschlagmaterial-Schichtanordnung (21) gebildet ist und ein horizontal verlaufender T-Querschenkel durch die Umschlagmaterial-Schichtanordnung ausschließlich des Verbindungsbereichs (22) gebildet ist.

12. Verpackung (20) nach dem vorangehenden Anspruch, wobei der T-Stammschenkel eine Länge in einem Bereich von 2/3 B bis B/2 +x aufweist, wobei B eine Länge des T-Querschenkels ist und x größer als B/2 ist.

13. Verpackung (20) nach dem vorangehenden Anspruch 11 oder 12, wobei der T-Stammschenkel in einem Bereich von B/2 bis 2/3 B bei einer Längenmessung von links nach rechts an dem T-Querschenkel angeordnet ist.

14. Verpackung (20) nach einem der vorangehenden Ansprüche 11 bis 13, wobei der T-Stammschenkel an dem T-Querschenkel angeordnet ist, um eine U-Form zu bilden, wobei die U-Form mit ihren Schenkeln ausgebildet ist, um den T-Querschenkel zu umklammern.

15. Schneideinrichtungsanordnung, aufweisend
eine Schneideinrichtung (1) nach einem der Ansprüche 1 bis 7, und
eine Verpackung (20) nach einem der Ansprüche 8 bis 14, und
wobei die Schneideinrichtung (1) mit der Verpackung (20) verpackt ist.
